# FASCICULE DE BREVET EUROPEEN

(11) **EP 0 356 276 B1**
(45) Date de publication et mention de la délivrance du brevet: **31.03.1993**
(21) Numéro de dépôt: 89402109.6
(22) Date de dépôt: 25.07.1989
(51) Int. Cl.: F16H 1/445

(54) **Système différentiel à glissement variable contrôlé**
Differentialsystem mit veränderlichem gesteuertem Schlupf
Differential system with controlled variable slip

(30) Priorité: 27.07.1988 FR 8810141
(43) Date de publication de la demande: 28.02.1990
(73) Titulaire: AUTOMOBILES PEUGEOT, 75116 Paris (FR); AUTOMOBILES CITROEN, 92200 Neuilly-sur-Seine (FR)
(72) Inventeur: Bouveret, Jean-Michel, F-94340 Joinville Le Pont (FR)
(74) Mandataire: Durand, Yves Armand Louis

(56) Documents cités:
- EP-A- 307 264
- DE-A- 3 025 282
- US-A- 2 817 251
- US-A- 4 679 463

## Description

La présente invention concerne un système différentiel à glissement variable contrôlé pouvant entraîner deux roues d'un essieu d'un véhicule automobile ou deux arbres respectivement reliés aux roues avant et arrière d'un tel véhicule.

Pour contrôler le glissement d'un tel système différentiel, plusieurs solutions techniques ont été proposées parmi lesquelles certaines utilisent le frottement de pièces antagonistes liées respectivement à l'entrée du différentiel (boîtier) et à un pignon planétaire de sortie du différentiel. Selon ces solutions, le taux de frottement et donc le niveau de couple transmissible est lié au couple transmis par le différentiel aux deux sorties de celui-ci.

Ce principe de fonctionnement peut s'avérer négatif dans certains cas d'utilisation d'un véhicule équipé d'un système différentiel de ce type. Par exemple, en virage, une variation rapide du couple moteur entraîne un changement de comportement brutal du véhicule. De même, lors d'une phase de freinage, le couple de retenue transitant par le différentiel entraîne un certain verrouillage de celui-ci, qui peut perturber le fonctionnement du système de freinage, notamment s'il existe un système d'anti-blocage et entraîner une instabilité du véhicule.

Les inconvénients ci-dessus des systèmes de contrôle de différentiel à frottement ont été en partie éliminés par un pilotage du taux de verrouillage, indépendant du seul couple transmis par le différentiel.

Les systèmes pilotés connus réalisent un taux de verrouillage du différentiel variable par application d'un effort variable sur un empilage de disques solidaires alternativement de l'entrée et d'une sortie au moins du différentiel.

Ainsi, certains systèmes du type décrit dans DE-A-3025282 utilisent un système hydraulique pour appliquer l'effort variable susmentionné et dont le récepteur est intégré au boîtier de différentiel, nécessitant une alimentation en fluide du récepteur par des joints tournants, ce qui rend ces systèmes difficiles à réaliser et peu fiables.

Selon d'autres systèmes tels que décrit dans US-A-4679363, l'effort appliqué à l'empilage des disques est dû pour partie aux réactions de dentures des pignons coniques du différentiel (donc un effort lié au couple transitant par le différentiel) et pour autre partie à un vérin hydraulique dont la pression d'utilisation peut être pilotée.

Ce dernier système permet, par rapport à un système puremement mécanique à frottement, de disposer d'une capacité de verrouillage améliorée lors du démarrage ou du roulage du véhicule à faible allure sur terrain peu adhérent.

Cependant, ce système connu présente deux inconvénients :
- du fait qu'une partie de l'effort de verrouillage est due à la réaction de dentures, donc au couple transitant dans le différentiel, il n'est jamais possible avec ce système d'avoir un différentiel libre en rotation lorsque cela est nécessaire, notamment en phase de freinage ;
- le fonctionnement des dentures du différentiel s'effectue à jeu non constant, du fait des légers déplacements axiaux des pignons planétaires sous couple et lors de l'application de l'effort de pilotage, ce qui est préjudiciable à la tenue des dentures.

L'invention a pour but de pallier les inconvénients ci-dessus en proposant un système différentiel à glissement variable contrôlé permettant d'obtenir dans toutes les phases de roulage du véhicule un taux de verrouillage indépendant du couple transitant par le différentiel et pouvant de ce fait être optimisé pour toutes les phases de roulage.

Pour atteindre ce but, le système différentiel à glissement variable contrôlé de l'invention, qui est du type décrit dans le préambule de la revendication principale prenant en compte l'état de la technique selon DE-A-3025282, présente les caractéristiques énoncées dans la partie caractérisante de la revendication 1.

Le système différentiel selon l'invention procure comme avantages majeurs un engrènement optimal des dentures, avec un jeu constant et permet de supprimer des joints tournants dans le cas d'une commande hydraulique.

Selon une caractéristique de l'invention, le boîtier intérieur est monobloc et est axialement interposé entre l'empilage de disques du moyen embrayage et un moyen terminal du dispositif de commande.

Avantageusement, le boîtier intérieur est accouplé au boîtier extérieur par un agencement de tenons-rainures.

De plus, le boîtier intérieur est de forme approximativement cylindrique et comprend au moins deux tenons externes diamétralement opposés logés respectivement dans deux rainures internes du boîtier extérieur.

Par ailleurs, le boîtier intérieur comprend une première paroi frontale annulaire dont une face plane externe vient en appui contre un disque de l'empilage de disques précité à la position embrayée du .moyen embrayage, la face plane interne opposée étant en appui contre une face plane externe correspondante de l'un des pignons planétaires et une seconde paroi frontale annulaire opposée contre laquelle est en appui le moyen terminal de commande.

Avantageusement, le moyen terminal comprend au moins deux leviers radiaux montés diamétralement opposés et pivotant entre la seconde paroi frontale annulaire et le boîtier extérieur.

Selon toujours une caractéristique de l'invention, le boîtier intérieur comprend une partie formant couvercle en appui contre une face plane externe correspondante de l'autre pignon planétaire et maintenue axialement dans le boîtier intérieur par un anneau interne formant circlips.

Suivant un second mode de réalisation, le boîtier intérieur comprend une paroi frontale annulaire interposée entre l'empilage de disques et le moyen terminal qui est formé par la face plane externe du pignon planétaire solidaire de l'arbre de sortie auquel sont accouplés certains des disques du moyen d'embrayage et déplaçables axialement dans le sens de serrage des disques et la paroi frontale annulaire opposée du boîtier intérieur est en appui contre la face plane externe de l'autre pignon planétaire.

De préférence, le boîtier interne est réalisé en deux demi-boîtiers séparés l'un de l'autre suivant un plan passant par l'axe des pignons planétaires.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :
La figure 1 est une vue en coupe du système différentiel de l'invention suivant un premier mode de réalisation ;
La figure 2 est une vue en coupe du boîtier interne utilisé dans le système différentiel de la figure 1 ;
La figure 3 est une vue en coupe du système différentiel de l'invention suivant le second mode de réalisation ;
La figure 4 est une vue suivant la flèche IV de la figure 3 du boîtier interne ; et
La figure 5 est une vue en coupe suivant la ligne V-V de la figure 4.

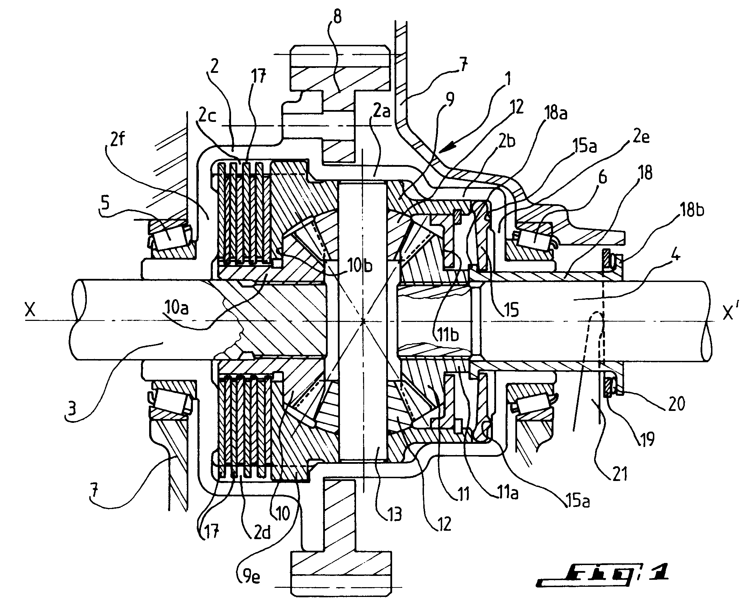

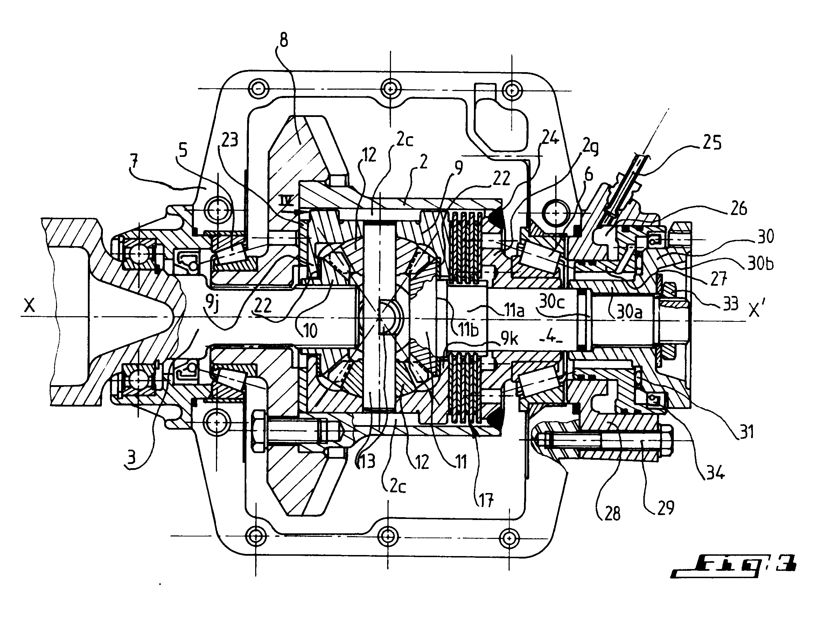

En se reportant aux figures 1 et 2, le système différentiel à glissement variable contrôlé conforme à l'invention comprend un différentiel 1 d'un véhicule automobile comprenant un boîtier extérieur de différentiel 2 en deux parties solidaires l'une de l'autre suivant un plan de joint confondu en plan de la figure 1 et monté rotatif relativement aux arbres de sortie coaxiaux 3 et 4 du différentiel par l'intermédiaire des moyens formant paliers constitués par exemple par deux roulements coniques 5 et 6 montés chacun entre le carter 7 du différentiel et le boîtier extérieur 2. Le boîtier extérieur 2 est entraîné en rotation par l'intermédiaire d'un pignon 8 solidaire du boîtier 2, par exemple par un moyen de vis de fixation (non représentées), et engrenant avec un pignon de renvoi (non représenté) solidaire par exemple d'un arbre de transmission du véhicule.

Le différentiel 1 comprend également un boîtier intérieur 9 mécaniquement accouplé en rotation au boîtier externe, pouvant coulisser axialement dans le boîtier extérieur 2 et enfermant les pignons du différentiel comprenant les deux pignons planétaires tronconiques 10 et 11 solidaires en rotation respectivement des arbres de sortie 3 et 4 et les pignons satellites 12 montés par paires respectivement sur deux arbres orthogonaux, dont un seul 13 est représenté, chaque arbre 13 de pignons satellites étant fixé à ses deux extrémités respectivement dans deux trous correspondants coaxiaux 14 du boîtier intérieur 9. Ce dernier présente une forme générale cylindrique comprenant deux portées cylindriques 9a et 9b de diamètres différents et raccordées l'une à l'autre par une partie en épaulement 9c, les portées 9a et 9b étant montées en ajustement coulissant respectivement dans deux parois cylindriques correspondantes 2a et 2b du boîtier extérieur 2. Le boîtier intérieur 9 comprend de plus au moins deux tenons diamétralement opposés 9d et 9e s'engageant respectivement dans deux rainures internes correspondantes 2c et 2d du boîtier extérieur 2 et parallèles à l'axe longitudinal X-X′ des arbres de sortie 3 et 4. De préférence, le boîtier comprend deux paires de tenons deux à deux diamétralement opposés. Le boîtier intérieur 9 se termine, d'une part, par une paroi frontale annulaire de fermeture 9f du boîtier 9 entourant coaxialement la queue 10a du pignon planétaire 10 et, d'autre part, par une face extrême frontale annulaire 9g, coaxiale à l'axe X-X′, et contre laquelle viennent en appui les extrémités supérieures de deux bras de levier 15 radiaux diamétralement opposés ayant chacun un point de pivotement 15a constitué par un bossage ou protubérance arrondie en appui contre la face interne d'une paroi transversale 2e de fermeture du boîtier extérieur 2 et perpendiculaire à l'axe X-X′. Dans la paroi cylindrique du boîtier intérieur 9 définissant la portée cylindrique externe 9b et la paroi frontale 9g est emmanchée une partie formant couvercle 16 transversale à l'axe X-X′ et maintenue axialement dans celle-ci par un anneau interne formant circlips 17. La partie formant couvercle 16 comprend une ouverture circulaire 16a entourant coaxialement la queue 11a du pignon planétaire 11 et a sa face plane interne 16b en appui contre une face plane arrière correspondante 11b du pignon planétaire 11. La partie formant couvercle 16 fait ainsi office de paroi de fermeture de la chambre enfermant les pignons du différentiel. De même, la paroi frontale 9f a sa face plane interne 9f1, parallèle à la face 16b de la partie formant couvercle 16, en appui contre la face plane arrière correspondante 10b du pignon planétaire 10 pour enfermer complètement les pignons du différentiel. Le boîtier intérieur 9 est réalisé en une seule pièce, c'est-à-dire monobloc.

Le sytème différentiel de l'invention comprend de plus un moyen embrayage formé par un empilage de disques 17, disposés perpendiculairement à l'axe X-X′, et alternativement accouplés au boîtier extérieur 2 et à l'arbre de sortie 3. Pour cela, certains des disques 17 comportent extérieurement des encoches périphériques régulièrement angulairement espacées pour définir des parties formant tenons s'engageant dans les rainures internes correspondantes 2c, 2d du boîtier extérieur 2 et les autres disques 17 comportent intérieurement des encoches périphériques régulièrement angulairement espacées pour définir des parties formant tenons s'engageant respectivement dans des rainures réalisées sur le pourtour de la queue 10a du pignon planétaire 10 et parallèles à l'axe X-X′. L'empilage de disques 17 est disposé entre la face plane interne perpendiculaire à l'axe X-X′ de la paroi transversale 2f de fermeture du boîtier 2 et une face plane externe 9f2 de la paroi frontale 9f du boîtier intérieur 9 et également perpendiculaire à l'axe X-X′.

Les pignons planétaires 10 et 11 sont solidaires en rotation respectivement des arbres de sortie 3 et 4 par l'intermédiaire de cannelures réalisées sur le pourtour des extrémités des arbres de sortie. Les deux pignons planétaires 10 et 11 peuvent se déplacer axialement suivant l'axe X-X′, sur ces cannelures ou avec l'arbre 3, 4 associé s'il est mobile axialement.

Un manchon 18, sur le pourtour duquel est monté rotatif le boîtier extérieur 2, est monté coaxialement sur l'arbre de sortie 4 de façon à pouvoir se déplacer axialement suivant l'axe X-X′. Le manchon 18 comprend un épaulement interne 18a en appui contre les extrémités inférieures d'actionnement des bras de levier 15 et un épaulement extérieur 18b pouvant tourner relativement à une butée annulaire 19 par l'intermédiaire d'un roulement à aiguilles 20 disposé entre la butée 19 et l'épaulement 18b.

Un dispositif, non représenté et extérieur au différentiel, commande le serrage, suivant un effort variable, des disques de friction 17 du moyen embrayage pour produire un couple de verrouillage du différentiel 1. Le dispositif de commande peut être du type électrique, hydraulique ou mécanique. La figure 1 représente un levier de commande 21, dont l'extrémité est en appui contre la butée fixe 19 et qui, lorsqu'actionné par le dispositif de commande, fait coulisser axialement le manchon 18 vers la droite par rapport à cette figure.

Le fonctionnement du système conforme à l'invention ressort déjà de la description qui en a été faite ci-dessus et va être maintenant expliqué en détail.

Lorsque le système occupe la position de repos représentée à la figure 1 où le levier ou bras de commande 21 n'exerce aucune action sur le manchon 18, le moyen embrayage 17 est débrayé de sorte que le différentiel fonctionne normalement, c'est-à-dire qu'il entraîne conjointement les deux arbres de sortie 3 et 4 à des vitesses angulaires pouvant différer librement.

Pour embrayer le moyen embrayage 17, le bras 21 est actionné de façon à le déplacer vers la droite par rapport à la figure 1, ce qui déplace le manchon 18 vers la droite, lequel, par son épaulement 18a, agit sur les bras de levier 15 pour déplacer vers la gauche le boîtier intérieur 9 par rapport au boîtier externe 2 de façon que la face 9f2 de la paroi frontale 9f vienne en appui contre le disque adjacent de l'empilage de disques 17 pour embrayer le moyen embrayage et donc accoupler le pignon planétaire 10 aux boîtiers extérieur 2 et intérieur 9. L'effort de serrage exercé à partir du dispositif de commande extérieur aux disques 17 du moyen embrayage produit ainsi un couple de verrouillage du différentiel. Cet effort est variable en fonction d'un certain nombre de paramètres liés à l'état du véhicule tels que la vitesse différentielle entre les deux arbres de sortie, la vitesse du véhicule, la charge moteur du véhicule, l'utilisation des freins, le braquage des roues directrices, etc... . Le déplacement axial du boîtier intérieur 9 parallèlement à l'axe X-X′ vers la position embrayée du moyen d'embrayage 17 s'accompagne également d'un déplacement concomitant des pignons planétaires 10, 11 et satellites 12 de façon à respecter le principe du fonctionnement à jeu constant du différentiel.

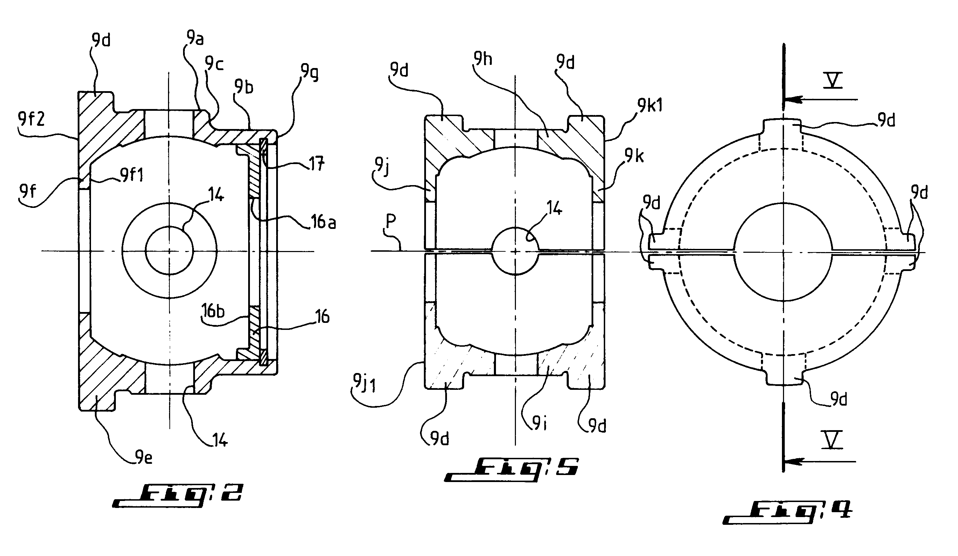

Le second mode de réalisation du système différentiel de l'invention va être maintenant décrit en référence aux figures 3 à 5, les éléments identiques à ceux représentés aux figures 1 à 2 et/ou accomplissant les mêmes fonctions portant les mêmes références. Ainsi, seules les différences existant entre ces deux modes de réalisation seront détaillées.

Selon ce second mode de réalisation, le boîtier intérieur 9, de forme approximativement cylindrique, est réalisé en deux demi-boîtiers 9h et 9i séparés l'un de l'autre par un plan axial de symétrie P perpendiculaire au plan de la figure 3 et contenant l'axe X-X′ mais chaque demi-boîtier 9h, 9i est réalisé en un seul bloc en direction axiale parallèle à l'axe X-X′. Le boîtier 9 comprend deux groupes de quatre tenons 9d réalisés sur le pourtour du boîtier et axialement distants l'un de l'autre. Les quatre tenons de chaque groupe sont deux à deux diamétralement opposés, deux tenons successifs étant angulairement espacés d'un angle de 90°. De plus, deux tenons diamétralement opposés respectivement des deux groupes de tenons sont réalisés en deux moitiés de tenons situées de part et d'autre du plan de symétrie P du boîtier 9. Les tenons 9d s'engagent respectivement dans des rainures rectilignes correspondantes 2c à l'intérieur du boîtier extérieur 2 de façon à permettre notamment le coulissement du boîtier intérieur 9 relativement au boîtier extérieur 2. Le boîtier intérieur 9 comporte, à l'état assemblé des deux demi-boîtiers 9h et 9i, deux parois frontales annulaires espacées 9j et 9k enfermant les pignons 10-12 du différentiel et dont les faces planes internes transversales à l'axe X-X′ viennent respectivement en appui, par l'intermédiaire de bagues de friction 22 contre les faces planes arrière correspondantes des deux pignons planétaires tronconiques 10 et 11. La face plane externe 9j1 de la paroi frontale 9j, à la position de repos du système de l'invention représentée à la figure 3, est en appui contre une face interne plane correspondante du pignon tronconique d'entraînement 8 par l'intermédiaire d'une bague de friction 23. Le moyen embrayage à disques empilés 17 est disposé entre la face plane externe 9k1 de la paroi frontale 9k et la face plane interne d'une partie en équerre 2g de fermeture du boîtier extérieur 2 et solidaire de ce dernier par exemple par un cordon de soudure annulaire 24. La paroi frontale 9k se trouve ainsi interposée entre le moyen embrayage 17 et le pignon planétaire 11, dont la queue 11a est réalisée en une seule pièce avec l'arbre de sortie 4 du différentiel. Les disques 17 du moyen embrayage sont alternativement accouplés au boîtier extérieur 2 par les rainures internes 2c et à la queue 11a du pignon 11 par des rainures rectilignes parallèles réalisées sur le pourtour de celle-ci.

L'arbre de sortie 4 peut être déplacé vers la droite par rapport à la figure 3 pour exercer par l'intermédiaire du dispositif de commande extérieur le serrage, suivant un effort variable, des disques 17 du moyen d'embrayage. Dans le cas présent, le dispositif de commande est du type hydraulique où un fluide hydraulique est envoyé sous pression, par l'intermédiaire d'une conduite d'amenée 25 dans une chambre 26 délimitée par un moyen formant piston annulaire 27 se déplaçant dans une paroi cylindrique coaxiale à l'axe X-X′ définie dans une pièce 28 fixée de façon étanche au carter 7 par les vis de fixation 29. Une pièce 30 de commande du déplacement axial de l'arbre de sortie 4 suivant l'axe X-X′ comprend une portion intermédiaire cylindrique 30a liée en rotation à l'arbre 4 par des cannelures réalisées sur le pourtour de celui-ci et tournant relativement au moyen formant piston 27 par l'intermédiaire d'un roulement de butée à aiguilles 31 interposé entre le moyen formant piston 27 et la pièce 30. Celle-ci est immobilisée axialement sur l'arbre 4 par maintien en appui sur un épaulement 30c de ce dernier au moyen d'un écrou 33 vissé sur l'extrémité filetée de l'arbre. Un joint d'étanchéité à lèvre 34 est monté coaxialement à l'axe X-X′ et interposé entre le moyen formant piston 27 et la pièce 30.

Lorsque du fluide sous pression est introduit dans la chambre 26 par l'intermédiaire de la conduite 25, le moyen formant piston 27 se déplace axialement vers la droite par rapport à la figure 3 de façon à déplacer dans le même sens la pièce 30 qui commande le déplacement axial de l'arbre 4 et donc du pignon planétaire 11, dont la face plane arrière 11b agit directement sur la paroi frontale 9k du boîtier intérieur 9 qui exerce un effort variable de serrage des disques 17 du moyen d'embrayage, créant ainsi un couple de verrouillage du différentiel. Le boîtier intérieur 9 est ainsi conçu pour déplacer ensemble les pignons planétaires 10, 11 et les pignons satellites 12 suivant l'axe X-X′ afin de respecter le principe du fonctionnement à jeu constant du différentiel.

Le système différentiel à glissement variable tel qu'il ressort des deux modes de réalisation ci-dessus décrits, permet donc d'obtenir dans toutes les phases de roulage du véhicule un taux de verrouillage indépendant du couple transitant par le différentiel et pouvant de ce fait être optimisé pour toutes les phases de roulage.

## Revendications

1. Système différentiel à glissement variable contrôlé du type comprenant un boîtier extérieur (2) monté rotatif dans un carter (7) du différentiel (1) et entraînant les pignons planétaires (10, 11) et satellites (12) du différentiel (1) ; un moyen embrayage à empilage de disques (17) accouplés alternativement au boîtier extérieur et à l'un des arbres coaxiaux de sortie (3, 4) de différentiel et pouvant occuper une position débrayée où le différentiel entraîne conjointement les deux arbres de sortie respectivement à deux vitesses angulaires pouvant différer librement et une position embrayée où l'action du différentiel est limitée ou verrouillée, s'opposant à une rotation relative entre les deux arbres de sortie ; et un dispositif de commande du serrage (21), suivant un effort variable, des disques du moyen embrayage pour produire un couple de verrouillage du différentiel ; l'effort variable de serrage étant transmis par une pièce annulaire entourant au moins une partie des pignons (10-12) du différentiel et peuvant coulisser dans le boîtier extérieur (2) ; caractérisé en ce que la pièce annulaire est un boîtier intérieur (9) enfermant les pignons (10-12) du différentiel (1) et portant les pignons satellites (12), réalisé en un seul bloc au moins en direction axiale parallèle à l'axe longitudinal (X-X′) des arbres de sortie (3, 4) et accouplé au boîtier extérieur (2) en pouvant coulisser axialement dans celui-ci et en ce que le dispositif de commande (21) est extérieur aux boitiers (2, 9) et déplace ensemble axialement le boîtier intérieur (9) et les pignons (10-12) du différentiel (1) de façon que le boîtier intérieur (9) transmette directement l'effort de serrage variable aux disques (17) du moyen embrayage.

2. Système selon la revendication 1, caractérisé en ce que le boîtier intérieur (9) est accouplé au boîtier extérieur (2) par un agencement de tenons (9d)-rainures (2c).

3. Système selon la revendication 1 ou 2, caractérisé en ce que le boîtier intérieur (9) est de forme approximativement cylindrique et comprend au moins deux tenons externes diamétralement opposés logés respectivement dans deux rainures internes correspondantes (2c) du boîtier extérieur (2).

4. Système selon l'une des revendications précédentes, caractérisé en ce que le boîtier intérieur (9) est monobloc et est axialement interposé entre l'empilage de disques (17) du moyen embrayage et un moyen terminal (15) du dispositif de commande.

5. Système selon l'une des revendications précédentes, caractérisé en ce que le boîtier intérieur (9) comprend, à une première extrémité une paroi frontale annulaire (9f), dont une face plane externe (9f2) vient en appui contre un disque (17) de l'empilage de disques précité à la position embrayée du moyen embrayage, et dont la face plane interne opposée (9f1) est en appui contre une face plane externe correspondante (10b) de l'un (10) des pignons planétaires, et à l'extrémité opposée une face frontale annulaire (9g) contre laquelle est en appui le moyen terminal de commande (15).

6. Système selon l'une des revendications précédentes, caractérisé en ce que le moyen terminal (15) comprend au moins deux leviers radiaux montés pivotants entre la face frontale annulaire (9g) et le boîtier extérieur (2).

7. Système selon la revendication 6, caractérisé en ce qu'il comprend un levier (21) du dispositif de commande pouvant actionner chaque levier pivotant (15) par l'intermédiaire d'un manchon axialement mobile (18).

8. Système selon l'une des revendications précédentes, caractérisé en ce que le boîtier intérieur (9) comprend une partie formant couvercle (16) en appui contre une face plane externe correspondante (11b) de l'autre pignon planétaire (11) et maintenue axialement dans le boîtier intérieur (9) par un anneau interne formant circlips (17).

9. Système selon l'une des revendications 1 à 3, caractérisé en ce que le boîtier intérieur (9) comprend une paroi frontale annulaire (9k) interposée entre l'empilage de disques (17) et le moyen terminal (11b) précité qui est formé par la face plane externe du pignon planétaire (11) solidaire de l'arbre de sortie (4) auquel sont accouplés certains des disques (17) du moyen embrayage et déplaçable axialement dans le sens de serrage des disques (17) et en ce que la paroi frontale annulaire opposée (9j) du boîtier intérieur (9) est en appui contre la face plane externe (10b) de l'autre pignon planétaire (10).

10. Système selon la revendication 9, caractérisé en ce que le boîtier intérieur (9) est réalisé en deux demi-boîtiers (9h, 9i) séparés l'un de l'autre suivant un plan passant par l'axe des pignons planétaires.

11. Système selon la revendication 9 ou 10, caractérisé en ce que le boîtier intérieur (9) comprend deux groupes axialement distants de tenons (9d) réalisés sur le pourtour dudit boîtier en étant deux à deux diamétralement opposés, deux des tenons diamétralement opposés de chaque groupe étant réalisés en deux moitiés disposées de part et d'autre du plan de symétrie axial (P).

## Patentansprüche

1. Differentialsystem mit kontrolliertem veränderlichem Schlupf, derjenigen Gattung mit einem drehbar in einem Gehäuse (7) des Differentials (1) angeordneten und die Wellenkegelzahnräder (10, 11) und die Ausgleichkegelzahnräder (12) des Differentials (1) antreibenden äusseren Gehäuse ; einem Kupplungsmittel mit einem Stapel von wechselweise mit dem äusseren Gehäuse und mit einer der koaxialen Abtriebswellen (3, 4) des Differentials gekoppelten Scheiben (17), und das eine ausgekuppelte Stellung in welcher das Differential die beiden Abtriebswellen zusammen jeweils mit zwei frei unterschiedlichen Winkelgeschwindigkeiten antreibt und eine eingekuppelte Stellung in welcher die Wirkung des Differentials begrenzt beziehungsweise verriegelt ist und sich einem relativen Umlauf zwischen den beiden Abtriebswellen widersetzt, einnimmt ; und einer Vorrichtung (21) zur Steuerung des Einklemmens der Scheiben des Kupplungsmittels mit einer veränderlichen Kraft, um ein Kupplungsmoment des Differentials zu erzeugen ; wobei die veränderliche Klemmkraft durch ein wenigstens einen Teil der Ritzel (10-12) des Differentials umgebendes und in dem äusseren Gehäuse (2) gleitbares ringförmiges Stück übertragen wird ; dadurch gekennzeichnet, dass das ringförmige Stück ein die Ritzel (10-12) des Differentials (1) einschliessendes und die Ausgleichkegelzahnräder (12) tragendes, als einziger Block wenigstens in der zur Längsachse (X-X′) der Abtriebswellen (3, 4) parallelen Axialrichtung hergestelltes und mit dem äusseren Gehäuse (2) axial gleitbar in diesem gekoppeltes inneres Gehäuse (9) ist und dass die Steuervorrichtung (21) ausserhalb der Gehäuse (2, 9) liegt und das innere Gehäuse (9) und die Zahnräde (10-12) des Differentials (1) derart zusammen bewegt dass das innere Gehäuse (9) die veränderliche Klemmkraft auf die Scheiben (17) des Kupplungsmittels unmittelbar überträgt.

2. System nach Anspruch 1 oder 2, dadurch gekennzeichnet, dass das innere Gehäuse (9) mit dem äusseren Gehäuse (2) durch eine Anordnung von Zapfen (9d)-Nuten (2c) gekoppelt ist.

3. System nach Anspruch 1, dadurch gekennzeichnet, dass das innere Gehäuse (9) annähernd zylindrischer Gestalt ist und wenigstens zwei diametral entgegengesetzte, jeweils in zwei entsprechenden inneren Nuten (2c) des äusseren Gehäuses (2) untergebrachte äussere Zapfen aufweist.

4. System nach einem der vorangehenden Ansprüche, dadurch gekennzeichnet, dass das innere Gehäuse (9) einstückig ist und zwischen dem Stapel von Scheiben (17) des Kupplungsmittels und einem Endmittel (15) der Steuervorrichtung gefügt ist.

5. System nach einem der vorangehenden Ansprüche, dadurch gekennzeichnet, dass das innere Gehäuse (9) an einem ersten Ende eine ringförmige Stirnwand (9f), deren eine flache Aussenfläche (9f2) in Abstützung an einer Scheibe (17) des vorgenannten Stapels von Scheiben in der eingekuppelten Stellung des Kupplungsmittels kommt, und deren entgegengesetzte flache Innenfläche (9f1) sich an einer entsprechenden flachen Aussenfläche (10b) des einen (10) der Wellenkegelzahnräder abstützt und an dem entgegengesetzten Ende, eine ringförmige Stirnfläche (9g), an welcher sich das Endsteuermittel (15) abstützt, aufweist.

6. System nach einem der vorangehenden Ansprüche, dadurch gekennzeichnet, dass das Endmittel (15) wenigstens zwei zwischen der ringförmigen Stirnfläche (9g) und dem äusseren Gehäuse (2) schwenkbar angeordnete Radialhebel aufweist.

7. System nach Anspruch 6, dadurch gekennzeichnet, dass es einen Hebel (21) der Steuervorrichtung, der jeden Schwenkhebel (15) über eine axialbewegliche Muffe (18) betätigen kann, umfasst.

8. System nach einem der vorangehenden Ansprüche, dadurch gekennzeichnet, dass das innere Gehäuse (9) einen sich an der entsprechenden flachen Aussenfläche (11b) des anderen Wellenkegelzahnrades (11) abstützenden und in dem inneren Gehäuse (9) durch einen einen Sprengring bildenden inneren Ring (17) axial gehaltenen, einen Deckel bildenden Teil (16) aufweist.

9. System nach einem der Ansprüche 1 bis 3, dadurch gekennzeichnet, dass das innere Gehäuse (9) eine zwischen dem Stapel von Scheiben (17) und dem vorgenannten Endmittel (11b) zwischengefügte ringförmige Stirnwand (9k) aufweist, welches durch die flache Aussenfläche des mit der Abtriebswelle (4) fest verbundenen Wellenkegelzahnrades gebildet wird, mit welcher gewisse Scheiben (17) des Kupplungsmittels gekoppelt sind und welche in Richtung des Einklemmens der Scheiben (17) axial verschiebbar ist und dass die entgegengesetzte ringförmige Stirnwand (9j) des inneren Gehäuses (9) sich an der flachen Aussenfläche (10b) des anderen Wellenkegelzahnrades (10) abstützt.

10. System nach Anspruch 9, dadurch gekennzeichnet, dass das innere Gehäuse (9) in zwei entlang einer durch die Axe der Wellenkegelzahnräder führenden Ebene von einander getrennten Halbgehäusen (9h, 9i) hergestellt ist.

11. System nach Anspruch 9 oder 10, dadurch gekennzeichnet, dass das innere Gehäuse (9) zwei an dem Umfang des besagten Gehäuses hergestellte voneinander axial entfernte Gruppen von Zapfen (9d) aufweist, die zwei zu zwei diametral entgegengesetzt sind , wobei zwei der entgegengesetzten Zapfen jeder Gruppe in zwei beiderseits der axialen Symmetrieebene (P) angeordneten Hälften hergestellt sind.

## Claims

1. Differential system with controlled variable slip of the type comprising an external box (2) rotatably mounted in a case (7) of the differential (1) and driving the bevel side gears (10, 11) and the pinion gears (12) of the differential (1) ; a clutch means with a stack of disks (17) alternately coupled to the external box and to one of the coaxial output shafts (3, 4) of the differential and capable of assuming a declutched position in which the differential jointly drives both output shafts at two angular speeds, respectively, which may differ freely and an engaged clutched position in which the action of the differential is limited or locked, opposing a relative rotation between both output shafts ; and a device (21) for the control of the clamping with a variable force of the disks of the clutch means to produce a locking torque of the differential ; the variable clamping force being transmitted by an annular part surrounding at least one portion of the pinions (10-12) of the differential and slidable in the external box (2) ; characterized in that the annular part is an internal housing (9) enclosing the pinions (10-12) of the differential (1) and carrying the pinion gears (12), made in one single block at least in the axial direction parallel to the longitudinal axis (X-X′) of the output shafts (3, 4) and coupled to the external box (2) and being axially slidable in the latter and in that the control device (21) is outside of the boxes (2, 9) and axially displaces together the internal box (9) and the pinions (10-12) of the differential (1) so that the internal box (9) directly conveys the variable clamping force to the disks (17) of the clutch means.

2. System according to claim 1, characterized in that the internal box (9) is coupled to the external box (2) by an arrangement of lugs (9d)-grooves (2c).

3. System according to claim 1 or 2, characterized in that the internal housing (9) is of approximately cylindrical shape and comprises at least two diametrally opposite external lugs accommodated in two corresponding internal grooves (2c), respectively, of the external box (2).

4. System according to one of the foregoing claims, characterized in that the internal housing (9) is made in one integral piece and is axially interposed between the stack of disks (17) of the clutch means and a terminal means (15) of the control device.

5. System according to one of the foregoing claims, characterized in that the internal housing (9) comprises, at a first end, an angular front wall (9f) one external flat face (9f2) of which is caused to bear upon a disk (17) of the aforesaid stack of disks when the clutch means is let in the engaged position and the opposite internal flat face (9f1) of which is bearing upon a corresponding external flat face (10b) of one (10) of the bevel side gears and at the opposite end, an annular front face (9g) upon which is bearing the terminal control means (15).

6. System according to one of the foregoing claims, characterized in that the terminal means (15) comprises at least two radial levers pivotally mounted between the annular front face (9g) and the external box (2).

7. System according to claim 6, characterized in that it comprises a lever (21) of the control device capable of actuating each pivoting lever (15) through the medium of an axially movable sleeve (18).

8. System according to one of the foregoing claims, characterized in that the internal housing (9) comprises a part forming a cover (16) bearing upon a corresponding external flat face (11b) of the other bevel side gear (11) and held axially in the internal housing (9) by an internal ring forming a circlips (17).

9. System according to one of claims 1 to 3, characterized in that the internal housing (9) comprises an annular front wall (9k) interposed between the stack of disks (17) and the aforesaid terminal means (11b) which is formed by the external flat face of the bevel side gear (11) made fast to the output shaft (4) to which are coupled some of the disks (17) of the clutch means and axially displaceable in the direction of clamping of the disks (17) and in that the opposite annular front wall (9j) of the internal housing (9) is bearing upon the external flat face (10b) of the other bevel side gear (10).

10. System according to claim 9, characterized in that the internal housing (9) is made in two half-housings (9h, 9i) separated from each other along a plane passing through the axis of the bevel side gears.

11. System according to claim 9 or 10, characterized in that the internal housing (9) comprises two axially spaced groups of lugs (9d) provided on the periphery of the said housing while being diametrally opposite two by two, two of the diametrally opposite lugs of each group being made in two halves arranged on either side of the axial plane of symmetry (P).
